(19) **Europäisches Patentamt**
**European Patent Office**
**Office européen des brevets**

(11) **EP 4 247 087 A1**

(12) **EUROPEAN PATENT APPLICATION**
published in accordance with Art. 153(4) EPC

(43) Date of publication:
**20.09.2023 Bulletin 2023/38**

(21) Application number: **21918605.3**

(22) Date of filing: **15.01.2021**

(51) International Patent Classification (IPC):
**H04W 72/04** (2023.01)     **H04W 72/08** (2009.01)
**H04W 72/12** (2023.01)

(52) Cooperative Patent Classification (CPC):
**H04W 72/04; H04W 72/12; H04W 72/54**

(86) International application number:
**PCT/CN2021/072278**

(87) International publication number:
**WO 2022/151401 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **SU, Hongjia**
  **Shenzhen, Guangdong 518129 (CN)**
• **DONG, Lei**
  **Shenzhen, Guangdong 518129 (CN)**
• **GUO, Wenting**
  **Shenzhen, Guangdong 518129 (CN)**
• **LU, Lei**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **COMMUNICATION METHOD, TERMINAL DEVICE AND SYSTEM**

(57) This application is applicable to the fields such as V2X, intelligent driving, and intelligent connected vehicles, and provides a communication method and system, and a terminal apparatus, to improve resource utilization. The method includes: A first terminal apparatus receives first sidelink information from a third terminal apparatus in a first slot. The first terminal apparatus determines an available time-frequency resource and/or an unavailable time-frequency resource in the first slot based on the first sidelink information. The first terminal apparatus sends first indication information to a second terminal apparatus, where the first indication information indicates the available time-frequency resource and/or the unavailable time-frequency resource in the first slot, and the first slot is a slot in which the second terminal apparatus sends second sidelink information.

FIG. 5

## Description

## TECHNICAL FIELD

This application relates to the communication field, and more specifically, to a communication method and system, and a terminal apparatus.

## BACKGROUND

Vehicle-to-everything (vehicle-to-everything, V2X) communication is communication between a vehicle and everything outside the vehicle, and includes vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication.

The V2X communication is specific to high-speed devices represented by vehicles, and is a basic and key technology used in scenarios, for example, intelligent vehicles, autonomous driving, and intelligent transportation systems, in which there is a very high requirement for a communication delay in the future. The V2X communication may support a communication scenario in which there is network coverage and a communication scenario in which there is no network coverage, and a resource allocation manner of the V2X communication includes a manner in which a network allocates a V2X transmission resource and a manner in which a terminal independently selects a V2X transmission resource.

In the manner in which the terminal independently selects the V2X transmission resource, to ensure reliability, a sending terminal selects a resource through sensing (sensing), and receives, in a resource pool in a sensing window, sidelink information sent by another terminal. If the sending terminal cannot or does not perform sensing in a slot in the sensing window, that is, cannot learn of resource occupation of another terminal in the slot, for example, the sending terminal is in a sending state in the slot, the sending terminal cannot perform sending and receiving simultaneously due to half-duplex. In this case, the sending terminal excludes, based on configured, preconfigured, or predefined resource reservation period information, all resources in a corresponding slot that is in a resource selection window of the sending terminal and that is obtained by adding the slot and several resource reservation periods, where these excluded resources cannot be used by the sending terminal to send information to the another terminal. As a result, resources can be easily excessively excluded, available resources are reduced, and resource utilization is reduced.

## SUMMARY

This application provides a communication method and system, and a terminal apparatus, to improve resource utilization.

In V2X communication, a vehicle may encounter many unexpected traffic conditions in a driving process. For example, if a vehicle stops on a fast lane due to engine damage on a highway, the vehicle (namely, a sending terminal) sends parking information to another vehicle around the vehicle in a first slot. Then, the sending terminal does not arrange a warning sign according to a regulation, causing a vehicle driving behind the sending terminal to collide with the vehicle, and the sending terminal needs to send collision information to the another vehicle around the sending terminal.

Due to a half-duplex limitation, the sending terminal cannot receive a signal from the another vehicle in the first slot in which the sending terminal sends the parking information in a sensing window. Therefore, resource occupation in the first slot cannot be evaluated. In the conventional technology, a most conservative method is used, that is, all resources that cannot be evaluated due to the half-duplex limitation are excluded. However, in embodiments of this application, an auxiliary terminal instead of the sending terminal is used to evaluate the resource occupation in the first slot, and indicate an evaluation result to the sending terminal. The sending terminal determines, based on the evaluation result indicated by the auxiliary terminal, resources that are in the first slot and that can be used by the sending terminal to determine a resource for sending the collision information, instead of excluding all resources. This improves resource utilization.

According to a first aspect, a communication method is provided. The method is performed by a first terminal apparatus. The first terminal apparatus may be a first terminal device or a component in a first terminal device. The first terminal device may be an auxiliary terminal in V2X communication. For example, the first terminal device may be a vehicle that performs resource evaluation instead of the sending terminal when the sending terminal cannot perform resource evaluation, or the first terminal device may be a road side unit (Road Side Unit, RSU). The component in the first terminal device may be, for example, a processor, an in-vehicle communication module, a chip, or a chip system that is loaded in the auxiliary terminal.

The method includes: The first terminal apparatus receives first sidelink information from a third terminal apparatus in a first slot; the first terminal apparatus determines an available time-frequency resource and/or an unavailable time-frequency resource in the first slot based on the first sidelink information; and the first terminal apparatus sends first indication information to a second terminal apparatus, where the first indication information indicates the available time-frequency resource and/or the unavailable time-frequency resource in the first slot, and the first slot is a slot in which the second terminal apparatus sends second sidelink information.

Based on the foregoing technical solutions, because the second terminal apparatus sends the second sidelink information in the first slot, the second terminal apparatus cannot sense the time-frequency resource information used by the another terminal apparatus to send the sidelink information or time-frequency resource information reserved by the another terminal apparatus to send the sidelink information. The first terminal apparatus can learn of, by sensing in the first slot, the time-frequency resource information used by the another terminal apparatus to send the sidelink information or the time-frequency resource information reserved by the another terminal apparatus to send the sidelink information, and indicate, the determined available time-frequency resource and/or unavailable time-frequency resource, to the second terminal apparatus by using the first indication information. This can avoid the second terminal apparatus excluding all available periodic time-frequency resources based on the resource reservation period information, increase the available time-frequency resources, and improve resource utilization.

For example, a collided vehicle on a highway receives first indication information sent by an auxiliary vehicle around the vehicle. The first indication information indicates a resource evaluation result obtained by the auxiliary vehicle in a first slot in which the collided vehicle cannot perform resource evaluation because the vehicle sends parking information. When determining a resource for sending collision information, the collided vehicle considers, based on the first indication information, an available time-frequency resource and/or an unavailable time-frequency resource in the first slot, instead of excluding all resources corresponding to the first slot. This improves resource utilization.

In a possible design, the method further includes: The first terminal apparatus receives the second sidelink information from the second terminal apparatus in the first slot; and the first terminal apparatus determines, based on the second sidelink information received from the second terminal apparatus in the first slot, that the first slot is the slot in which the second terminal apparatus sends the second sidelink information.

According to this design, the first terminal apparatus may determine which slots are slots used by the second terminal apparatus to send information, so that more targeted resource assistance can be performed on the second terminal apparatus, to improve resource utilization and further improve reliability.

For example, the auxiliary vehicle can determine which slots are slots for the collided vehicle to send information, and then perform resource evaluation in this slot instead of the collided vehicle.

In a possible design, the first slot is located in a sensing window of the second terminal apparatus.

In a possible design, the first slot includes at least one subchannel, at least one first subchannel in the first slot is used by the second terminal apparatus to send the second sidelink information, and the at least one first subchannel belongs to the at least one subchannel.

In a possible design, the determining, by the first terminal apparatus based on the first sidelink information, an available time-frequency resource and/or an unavailable time-frequency resource in the first slot includes: The first terminal apparatus determines available time-frequency resources and/or unavailable time-frequency resources on all subchannels of the first slot based on the first sidelink information and/or the second sidelink information; or the first terminal apparatus determines, based on the first sidelink information, an available time-frequency resource and/or an unavailable time-frequency resource on a remaining subchannel other than the at least one first subchannel on all the subchannels of the first slot.

In a possible design, the first indication information indicates the available time-frequency resources and/or the unavailable time-frequency resources on all the subchannels of the first slot; or the first indication information indicates the available time-frequency resource and/or the unavailable time-frequency resource on the remaining subchannel other than the at least one first subchannel on all the subchannels of the first slot.

In a possible design, the first terminal apparatus determines, based on a first threshold, the available time-frequency resource and/or the unavailable time-frequency resource on the remaining subchannel other than the at least one first subchannel on all the subchannels of the first slot; and the first terminal apparatus determines an available time-frequency resource and/or an unavailable time-frequency resource on the at least one first subchannel based on a second threshold, where the second threshold is greater than the first threshold.

According to this design, because the second threshold is greater than the first threshold, compared with that in the remaining subchannel other than the at least one first subchannel on all the subchannels of the first slot, an available resource can be easily determined on the at least one first subchannel. This further improves resource utilization.

In a possible design, the first terminal apparatus sends the first indication information to the second terminal apparatus on a physical sidelink feedback channel.

According to a second aspect, a communication method is provided, and the method is performed by a second terminal apparatus. The second terminal apparatus includes a second terminal device or a component in a second terminal device. The second terminal device may be a data transmit end in V2X communication. For example, the second terminal device may be a transmit-end vehicle that needs to send related information of an accident to another vehicle when an accident occurs during driving, or may be a road side unit (Road Side Unit, RSU) that detects the sudden traffic accident. The component in the second terminal device may be, for example, a processor, an in-vehicle communication module, a chip, or a chip system that is mounted in the transmit-end vehicle.

The method includes: The second terminal apparatus sends second sidelink information to a first terminal apparatus in a first slot; the second terminal apparatus receives first indication information from the first terminal apparatus, where the first indication information indicates an available time-frequency resource and/or an unavailable time-frequency resource in the first slot, and the available time-frequency resource and/or the unavailable time-frequency resource in the first slot are/is determined by the first terminal apparatus based on first sidelink information received from a third terminal apparatus in the first slot; and the second terminal apparatus determines, based on the first indication information, a time-frequency resource for sending the third sidelink information.

Based on the foregoing technical solutions, because the second terminal apparatus sends the second sidelink information in the first slot, the second terminal apparatus cannot sense the time-frequency resource information used by the another terminal apparatus to send the sidelink information or time-frequency resource information reserved by the another terminal apparatus to send the sidelink information. The first terminal apparatus can learn of, by sensing in the first slot, the time-frequency resource information used by the another terminal apparatus to send the sidelink information or the time-frequency resource information reserved by the another terminal apparatus to send the sidelink information, and indicate, the determined available time-frequency resource and/or unavailable time-frequency resource, to the second terminal apparatus by using the first indication information. This can avoid the second terminal apparatus excluding all available periodic time-frequency resources based on the resource reservation period information, increase the available time-frequency resources, and improve resource utilization.

For example, a collided vehicle on a highway receives first indication information sent by an auxiliary vehicle around the vehicle. The first indication information indicates a resource evaluation result obtained by the auxiliary vehicle in a first slot in which the collided vehicle cannot perform resource evaluation because the vehicle sends parking information. When determining a resource for sending collision information, the collided vehicle considers, based on the first indication information, an available time-frequency resource and/or an unavailable time-frequency resource in the first slot, instead of excluding all resources corresponding to the first slot. This improves resource utilization.

In a possible design, the first slot is located in a sensing window of the second terminal apparatus.

In a possible design, the first slot includes at least one subchannel, the second terminal apparatus sends the second sidelink information to the first terminal apparatus on at least one first subchannel in the first slot, and the at least one first subchannel belongs to the at least one subchannel.

In a possible design, the first indication information indicates available time-frequency resources and/or unavailable time-frequency resources on all subchannels of the first slot; or the first indication information indicates an available time-frequency resource and/or an unavailable time-frequency resource on a remaining subchannel other than the at least one first subchannel on all the subchannels of the first slot.

In a possible design, the available time-frequency resource and/or the unavailable time-frequency resource on the remaining subchannel other than the at least one first subchannel on all the subchannels of the first slot are/is determined based on a first threshold; and an available time-frequency resource and/or an unavailable time-frequency resource on the at least one first subchannel are/is determined based on a second threshold, and the second threshold is greater than the first threshold.

According to this design, because the second threshold is greater than the first threshold, compared with that in the remaining subchannel other than the at least one first subchannel on all the subchannels of the first slot, an available resource can be easily determined on the at least one first subchannel. This further improves resource utilization.

In a possible design, the second terminal apparatus receives the first indication information from the first terminal apparatus on a physical sidelink feedback channel.

According to a third aspect, a first terminal apparatus is provided. The first terminal apparatus may perform the method provided in the first aspect. The first terminal apparatus specifically includes: a transceiver unit, configured to receive first sidelink information from a third terminal apparatus in a first slot; and a processing unit, configured to determine an available time-frequency resource and/or an unavailable time-frequency resource in the first slot based on the first sidelink information, where the transceiver unit is further configured to send first indication information to a second terminal apparatus, the first indication information indicates the available time-frequency resource and/or the unavailable time-frequency resource in the first slot, and the first slot is a slot in which the second terminal apparatus sends second sidelink information.

In a possible design, the transceiver unit is further configured to receive the second sidelink information from the second terminal apparatus in the first slot; and the processing unit is further configured to determine, based on the second sidelink information received from the second terminal apparatus in the first slot, that the first slot is the slot in which the second terminal apparatus sends the second sidelink information.

In a possible design, the first slot is located in a sensing window of the second terminal apparatus.

In a possible design, the first slot includes at least one subchannel, at least one first subchannel in the first slot is used by the second terminal apparatus to send the second sidelink information, and the at least one first subchannel belongs to the at least one subchannel.

In a possible design, the processing unit is specifically configured to: determine available time-frequency resources and/or unavailable time-frequency resources on all subchannels of the first slot based on the first sidelink information and/or the second sidelink information; or determine, based on the first sidelink information, an available time-frequency resource and/or an unavailable time-frequency resource on a remaining subchannel other than the at least one first subchannel on all the subchannels of the first slot.

In a possible design, the first indication information indicates the available time-frequency resources and/or the unavailable time-frequency resources on all the subchannels of the first slot; or the first indication information indicates the available time-frequency resource and/or the unavailable time-frequency resource on the remaining subchannel other than the at least one first subchannel on all the subchannels of the first slot.

In a possible design, the processing unit is specifically configured to: determine, based on a first threshold, the available time-frequency resource and/or the unavailable time-frequency resource on the remaining subchannel other than the at least one first subchannel on all the subchannels of the first slot; and determine an available time-frequency resource and/or an unavailable time-frequency resource on the at least one first subchannel based on a second threshold, where the second threshold is greater than the first threshold.

In a possible design, the transceiver unit is further configured to send the first indication information to the second terminal apparatus on a physical sidelink feedback channel.

According to a fourth aspect, a second terminal apparatus is provided. The second terminal apparatus may perform the method provided in the second aspect. The second terminal apparatus specifically includes: a transceiver unit, configured to send second sidelink information to a first terminal apparatus in a first slot, where the transceiver unit is further configured to receive first indication information from the first terminal apparatus, the first indication information indicates an available time-frequency resource and/or an unavailable time-frequency resource in the first slot, and the available time-frequency resource and/or the unavailable time-frequency resource in the first slot are/is determined by the first terminal apparatus based on first sidelink information received from a third terminal apparatus in the first slot; and a processing unit, configured to determine, based on the first indication information, a time-frequency resource for sending third sidelink information.

In a possible design, the first slot is located in a sensing window of the second terminal apparatus.

In a possible design, the first slot includes at least one subchannel, the second terminal apparatus sends the second sidelink information to the first terminal apparatus on at least one first subchannel in the first slot, and the at least one first subchannel belongs to the at least one subchannel.

In a possible design, the first indication information indicates available time-frequency resources and/or unavailable time-frequency resources on all subchannels of the first slot; or the first indication information indicates an available time-frequency resource and/or an unavailable time-frequency resource on a remaining subchannel other than the at least one first subchannel on all the subchannels of the first slot.

In a possible design, the available time-frequency resource and/or the unavailable time-frequency resource on the remaining subchannel other than the at least one first subchannel on all the subchannels of the first slot are/is determined based on a first threshold; and an available time-frequency resource and/or an unavailable time-frequency resource on the at least one first subchannel are/is determined based on a second threshold, and the second threshold is greater than the first threshold.

In a possible design, the transceiver unit is further configured to receive the first indication information from the first terminal apparatus on a physical sidelink feedback channel.

According to a fifth aspect, a communication apparatus is provided, including: a processor. The processor is coupled to at least one memory, and the processor is configured to read a computer program stored in the at least one memory, to perform the method according to any one of the first aspect or the possible designs of the first aspect, or perform the method according to any one of the second aspect or the possible designs of the second aspect.

According to a sixth aspect, a computer-readable storage medium is provided. The computer-readable storage medium stores a computer program, and when the computer program is run on a computer, the computer is enabled to perform the method according to any possible design of the first aspect or the second aspect.

According to a seventh aspect, a computer program product is provided. When the computer program product runs on a computer, the computer is enabled to perform the method according to any one of the first aspect and the second aspect or the possible designs of the first aspect and the second aspect.

According to an eighth aspect, a chip is provided, including a processor and a communication interface. The processor is configured to read instructions or a computer program to perform the method according to any possible design of the first aspect or the second aspect.

According to a ninth aspect, a communication system is provided, including the first terminal apparatus in the method according to the first aspect and the second terminal apparatus in the method according to the second aspect.

For beneficial effects in the third aspect to the ninth aspect and the possible designs of the third aspect to the ninth aspect, refer to beneficial effects in the first aspect or the second aspect and the possible designs of the first aspect or the second aspect.

## BRIEF DESCRIPTION OF DRAWINGS

FIG. 1 is a schematic diagram of communication between vehicles and external objects;
FIG. 2 is a schematic diagram of logical time domain units according to an embodiment of this application;
FIG. 3 is a schematic diagram of resource selection;
FIG. 4 is a schematic diagram of a communication scenario to which an embodiment of this application is applicable;
FIG. 5 is a schematic flowchart of interaction of a communication method according to an embodiment of this application;
FIG. 6 is a schematic diagram of resource selection according to an embodiment of this application;
FIG. 7 is a schematic diagram of another resource selection according to an embodiment of this application;
FIG. 8 is a schematic diagram of sending first indication information according to an embodiment of this application;
FIG. 9 is a schematic block diagram of a communication apparatus according to an embodiment of this application;
FIG. 10 is a schematic block diagram of another communication apparatus according to an embodiment of this application;
FIG. 11 is a schematic block diagram of still another communication apparatus according to an embodiment of this application; and
FIG. 12 is a schematic block diagram of a communication system according to an embodiment of this application.

## DESCRIPTION OF EMBODIMENTS

The following describes the technical solutions of this application with reference to accompanying drawings.

The following describes some terms in embodiments of this application, to facilitate understanding of a person skilled in the art.

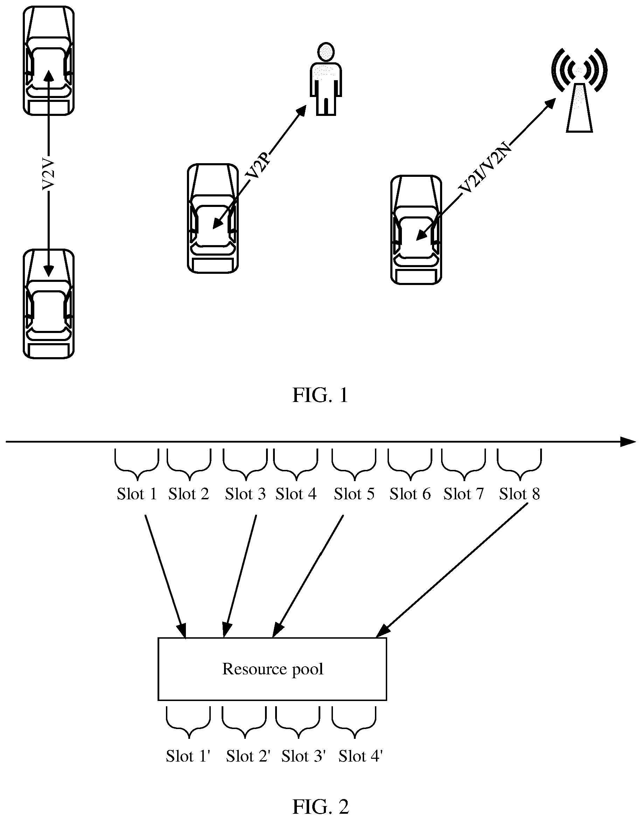

1. A terminal apparatus is, for example, a terminal device, or a module configured to implement a function of the terminal device, for example, a chip system. The chip system may be disposed in the terminal device. The terminal device includes a device that provides a voice and/or data connectivity for a user. Specifically, the terminal device includes a device that provides a voice for the user, or includes a device that provides data connectivity for the user, or includes a device that provides a voice and data connectivity for the user. For example, the terminal device may include a handheld device having a wireless connection function, or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) terminal device, a V2X terminal device, a machine-to-machine/machine type communication (machine-to-machine /machine-type communication, M2M/MTC) terminal device, and an internet of things (internet of things, IoT) terminal device. Most typically, the terminal apparatus may be a vehicle or a terminal-type road side unit, or a communication module or a chip built in a vehicle or a road side unit. FIG. 1 is a schematic diagram of communication between vehicles and external objects.

In embodiments of this application, terminal devices can support communication through a direct communication (PCS) interface, that is, support transmission through a sidelink.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement all or some of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located on a vehicle (for example, placed in the vehicle or mounted in the vehicle), the terminal devices may be considered as vehicle-mounted terminal devices. For example, the vehicle-mounted terminal devices are also referred to as on-board units (on-board units, OBUs).

In embodiments of this application, the terminal device may further include a relay (relay). Alternatively, it may be understood that any device that can perform data communication with a base station may be considered as a terminal device.

2. A network device includes, for example, an access network (access network, AN) device such as a base station (for example, an access point), and may be a device that communicates with a wireless terminal device over an air interface through one or more cells in an access network. Alternatively, for example, a network device in a V2X technology is a road side unit (road side unit, RSU). The RSU may be a fixed infrastructure entity supporting a V2X application, and may exchange a message with another entity supporting the V2X application. The network device may include a next-generation NodeB (next generation NodeB, gNB) in a 5th generation mobile communication technology (the 5th generation, 5G) new radio (new radio, NR) system (also referred to as an NR system for short), or may include a central unit (central unit, CU) and a distributed unit (distributed unit, DU) in a cloud access network (cloud radio access network, Cloud RAN) system. This is not limited in embodiments of this application.

3. Sidelink communication transmission mode Sidelink communication is performed between terminal apparatuses, and there are two transmission modes: a network device scheduling mode (generally referred to as a transmission mode 1, Transmission Mode 1) and a user autonomous resource selection mode (generally referred to as a transmission mode 2, Transmission Mode 2).

In a network coverage area, the terminal apparatus obtains SL resource pool (resource pool) configuration information by receiving a system information block (system information block, SIB), cell-specific (cell-specific) radio resource control (radio resource control, RRC) signaling, or terminal apparatus user-specific (UE-specific) RRC signaling from the network device. Alternatively, the terminal apparatus may use SL resource pool configuration information preconfigured before delivery of the device, for example, when there is no network coverage area. The SL resource pool configuration information indicates an SL resource pool, and the resource pool is a set of time-frequency resources and is used for side communication between UEs. The resource pool may include a code domain resource. A resource in the resource pool includes a resource for sending and receiving at least one of the following physical channels by the terminal apparatus, such as a PSCCH, a PSSCH, a PSDCH, a PSFCH, and a PSBCH. A service type carried on the PSSCH may include a unicast, multicast, and/or broadcast communication type.

The SL resource pool includes one or more time units in time domain. The time units may be one symbol, several symbols, one slot, one subframe, one frame, or the like. The one or more time units may be consecutive in time, or may be discrete. The SL resource pool includes one or more frequency domain units in frequency domain. The frequency domain units may be one resource element (resource element, RE), several REs, one resource block (resource block, RB), several RBs, one subchannel (subchannel), or several subchannels, where one subchannel includes one or more consecutive or non-consecutive RBs in frequency domain. In this application, unless a meaning of the time unit is specially specified, a slot is used for description, but a time unit is not limited to only a slot. Unless a meaning of the time-frequency domain unit is specially specified, a subchannel is used for description, but a frequency domain unit is not limited to only a subchannel.

Slots included in a resource pool are logically consecutive. The slots are referred to as logical slots. FIG. 2 is a schematic diagram of logical slots. A slot 1 to a slot 8 are consecutive slots in time, and these slots are referred to as physical slots (physical slots). A resource pool is configured to include a slot 1, a slot 3, a slot 5, and a slot 8 in time domain. Although these slots are not all consecutive in time, from a perspective of the resource pool, these slots included in the resource pool are relatively consecutive, and these slots are referred to as logical slots. A slot 1', a slot 2', a slot 3', and a slot 4' are respectively logical slots corresponding to the physical slot 1, the physical slot 3, the physical slot 5, and the physical slot 8 in the resource pool. The resource pool configuration information further includes resource reservation period (resource reservation period) information. The resource reservation period information may indicate a group of resource reservation periods $\{P_1, P_2, P_3, \cdots, P_i\}$, where i is a positive integer greater than or equal to 1. For example, the group of values includes 16 different resource reservation periods $\{P_1, P_2, P_3, \cdots, P_{16}\}$. A value of the resource reservation period may be any integer value from 0 to 99, or 100, 200, 300, ..., 1000, or the like, and a unit may be millisecond or a slot. $\{P_1, P_2, P_3, \cdots, P_i\}$ is physical time. In a resource pool, a logical resource reservation period corresponding to $\{P_1, P_2, P_3, \cdots P_i\}$ is $\{ P_1^{'}, P_2^{'}, P_3^{'}, \cdots, P_i^{'} \}$, and a unit of $\{ P_1^{'}, P_2^{'}, P_3^{'}, \cdots, P_i^{'} \}$ may be a slot. It may be understood that when a resource pool includes consecutive slots in time, that is, the resource pool is consecutive in physical time, logical slots and physical slots of the resource pool are equal. The resource reservation period information indicates a resource reservation period set that may be allowed by a terminal apparatus in the resource pool. To be specific, the terminal apparatus periodically sends SL information by using a resource reservation period in the resource reservation period set. In the autonomous resource selection transmission mode, the terminal apparatus determines resource selection through sensing (sensing). Specifically, a method for determining resource selection through sensing If the terminal apparatus does not perform sensing in a slot includes: The terminal apparatus generates to-be-sent SL information at a moment of a slot n, where the SL information includes at least one of a physical sidelink shared channel (physical sidelink shared channel, PSSCH), a physical sidelink control channel (physical sidelink control channel, PSCCH), a physical broadcast control channel (physical broadcast control channel, PSBCH), a physical sidelink feedback channel (physical sidelink feedback channel, PSFCH), and a physical downlink control channel (physical downlink control channel, PDCCH).

In an example, a method for determining, by the terminal apparatus by sensing a time-frequency resource set, a transmission resource for sending sidelink information may include:

The terminal apparatus determines, in triggering a resource selection process at a moment of the slot n, a time-frequency resource for sending to-be-sent SL information, where the SL information includes at least one of a physical sidelink shared channel (physical sidelink shared channel, PSSCH), a physical sidelink control channel (physical sidelink control channel, PSCCH), a physical broadcast control channel (physical broadcast control channel, PSBCH), a physical sidelink feedback channel (physical sidelink feedback channel, PSFCH), and a physical sidelink data channel (physical sidelink data channel, PSDCH). A service type carried on the PSSCH may include a unicast, multicast, and/or broadcast communication type.

It should be understood that, in this application, an expression [A, B] indicates a value range that includes boundary points A and B, and an expression (A, B) indicates a value range that does not include boundary points A and B. Similarly, an expression [A, B) indicates a value range that includes a boundary point A but does not include a boundary point B, and an expression (A, B] indicates a value range that does not include a boundary point A but includes a boundary point B. Details are not described in other parts of this document.

The terminal apparatus receives SL information, such as a PSCCH and/or a PSSCH, from another terminal apparatus in a network in a resource pool in a sensing window, for example, slots

$$[\,n - T_0, n - T_{proc,0}^{SL}\,]$$

. The sensing window is a time period in which the terminal apparatus obtains, before sending information, resource occupation of another terminal apparatus through sensing. $T_0$ is configured by the network device or preconfigured, and $T_{proc,0}^{SL}$ is determined by the terminal apparatus according to Table 1. In the table, $\mu_{SL}$ is related to a subcarrier spacing (subcarrier spacing, SCS) corresponding to an SL bandwidth part (bandwidth part, BWP) of the terminal apparatus, and $\mu_{SL}$ may be understood as an SCS configuration parameter of the SL BWP. Specifically, a correspondence between a subcarrier spacing SCS and $\mu_{SL}$ is shown in Table 2 below. The terminal apparatus may determine the parameter $T_{proc,0}^{SL}$ according to Table 1 and Table 2, where Table 1 and Table 2 are predefined in a protocol. An understandable manner is that the terminal apparatus determines, by sensing the time-frequency resource set, the transmission resource for sending the sidelink information. Specifically, the transmission resource for sending the sidelink information is determined by sensing the time-frequency resource set in the sensing window in the time-frequency resource set.

**Table 1**

| $\mu_{SL}$ | $T_{proc,0}^{SL}$ [slots] |
|---|---|
| 0 | 1 |
| 1 | 1 |
| 2 | 2 |
| 3 | 4 |

**Table 2**

| $\mu_{SL}$ | $\Delta f = 2^{\mu} \cdot 15$ [kHz] |
|---|---|
| 0 | 15 |
| 1 | 30 |
| 2 | 60 |
| 3 | 120 |
| 4 | 240 |

One piece of SCI may need to schedule at least one time of side transmission, for example, PSSCH transmission. For example, one piece of SCI needs to schedule three times of side transmission. A first time of side transmission is initial transmission of data carried by one PSSCH, and last two times of side transmission are retransmission of the data. For another example, one piece of SCI needs to schedule three times of side transmission, and the three times of side transmission are retransmission of one piece of data. The SCI obtained by the terminal apparatus through sensing includes information about a time domain resource and/or a frequency domain resource of scheduled side transmission, a resource reservation period indication (which may be carried by using a resource reservation period (resource reservation period) field) reflecting a data service period, priority information (priority), and the like. Specifically, the priority information may indicate priority information of a corresponding scheduled PSSCH, and/or priority information of a PSFCH associated with the scheduled PSSCH. The priority information indicates a priority value, the priority value may be any one of 1, 2, 3, 4, 5, 6, 7, and 8. In other words, any terminal apparatus may send one piece of SCI to reserve one or more future time-frequency resources for new transmission and/or retransmission of sending to-be-sent SL information. In an example, a terminal apparatus senses and decodes, on a PSCCH, sidelink control information (sidelink control information, SCI) sent by another terminal apparatus to learn of a time-frequency resource reservation status of the another terminal apparatus in a selection window of the terminal apparatus, and then determines to send SL information in the selection window of the terminal apparatus, for example, in slots $[n+T_1, n+T_2]$, where $n+T_1$ is a start slot number, $n+T_2$ is an end slot number, and $T_1$ and $T_2$ are determined based on a data delay of the terminal apparatus. This avoids the terminal selecting, in the selection window, a time-frequency resource reserved by the another terminal apparatus to send the SL information, reduces resource collision and improves SL information transmission reliability.

If the terminal apparatus does not perform sensing in a slot in slots $[n - T_0, n - T^{SL}_{proc,0}]$ in the sensing window, for example, the terminal apparatus is in a sending state in the slot, and cannot perform sending and receiving simultaneously due to half-duplex (half duplex), in this case, the terminal apparatus excludes, based on the resource reservation period information configured by the network device, or preconfigured, or predefined resource reservation period information, all resources in a corresponding slot that is in the resource selection window $[n+T1, n+T_1]$ of the terminal apparatus and that is obtained by adding the slot and reservation time-frequency resources determined based on the resource reservation period information. The resource reservation period information includes several resource reservation periods $\{P_1, P_2, P_3, \cdots, P_i\}$, where $i = 1, 2, 3, 4 \ldots 16$ .

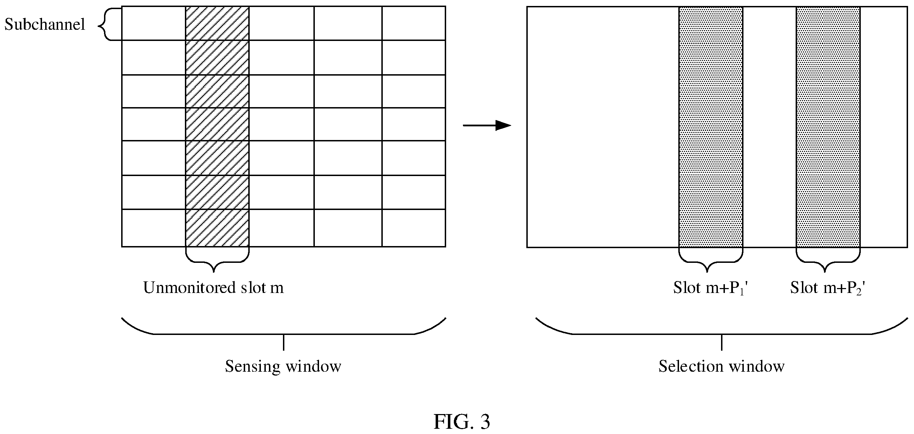

FIG. 3 is a schematic diagram of resource selection. For example, a second terminal apparatus sends an SL in a slot m, and therefore cannot perform sensing in the slot m. All resources in two slots, a slot $m+P'_1$ and a slot $m+P'_2$, are excluded from a resource selection window based on configured resource reservation periods $P_1$ and $P_2$, where $P'_1$ and $P'_2$ are logical periods that are in a time-frequency resource set and that are respectively corresponding to $P_1$ and $P_2$.

Further, if the following conditions are met at the same time, the second terminal apparatus further excludes a time-frequency resource that is reserved by another terminal apparatus and that is in the selection window from a time-frequency resource for sending to-be-sent sidelink information, that is, excludes an unavailable time-frequency resource:

1. The second terminal apparatus receives SCI in a slot $t^{SL}_m$, where the SCI includes a resource reservation period (resource reservation period) field that carries a resource reservation period indication. A value of the resource reservation period indication is a resource reservation period in a resource reservation period set that may be allowed, in the resource pool, by the terminal apparatus indicated by the resource reservation period information, and is denoted as $P_{rsvp\_RX}$. A priority (priority) field in the SCI indicates a value $prio_{RX}$. The value $P_{rsvp\_RX}$ is a period of a PSSCH scheduled by the SCI, the value $prio_{RX}$ is a priority value of a PSSCH corresponding to the SCI, and $t^{SL}_m$ is a slot in a sensing window

$$[n - T_0, n - T^{SL}_{proc,0}]$$

.

2. An RSRP measurement result determined by the second terminal apparatus based on the SCI is higher than a threshold $Th_{prioTX, prioRX}$, where the threshold $Th_{prioTX, prioRX}$ is a function corresponding to a priority value indicated in the received SCI and a priority value corresponding to to-be-sent data of the second terminal apparatus.

3. A reserved time-frequency resource determined by SCI received by the second terminal apparatus in the slot $t^{SL}_m$ overlaps a time-frequency resource in the selection window.

After excluding the unavailable time-frequency resource in the resource selection window of the second terminal apparatus, the second terminal apparatus may determine that a remaining time-frequency resource in the resource selection window is an available time-frequency resource, to select, from the available time-frequency resource, a time-frequency resource for sending the to-be-sent sidelink information. The resource selection window is a time period in which the terminal apparatus selects the resource for transmitting the sidelink information. The resource selection window usually appears later than the sensing window in time domain.

In some implementations, a quantity of times that the second terminal apparatus performs sensing in the sensing window may be reduced, to reduce power of the terminal apparatus. For example, different from sensing performed on a sensing window, for example, in slots $[n - T_0, n - T^{SL}_{proc,0}]$, sensing is performed only in some slots before a slot n (referred to as partial sensing), and a time-frequency resource for sending SL information is determined based on a result of partial sensing. For example, the second terminal apparatus does not perform sensing, and selects, in a random selection manner, the time-frequency resource for sending the SL information.

Due to a half-duplex limitation, when the second terminal apparatus does not perform sensing in a slot in the sensing window, SCI information of another terminal apparatus in the slot cannot be learned of, that is, reservation information of the another terminal apparatus in the slot cannot be learned of. Therefore, all possible periodic resources reserved based on the slot can be excluded from available resources only in the resource selection window of the second terminal apparatus. As a result, resources can be easily excessively excluded, available resources are reduced, resource utilization is reduced, a collision probability of resources selected by different terminal apparatuses is increased, and transmission reliability is reduced. Further, because the second terminal apparatus cannot learn of the reservation information of the another terminal apparatus in the slot, a sensing result is incomplete. This increases a probability of collision with a resource selected by the another terminal apparatus, and reduces transmission reliability.

Therefore, embodiments of this application provide a communication method, to improve resource utilization.

In the communication method, an auxiliary terminal apparatus is used to provide sensing result information that cannot be determined by an assisted terminal apparatus, so as to assist the terminal apparatus in selecting a resource, including excluding, from an available resource, a resource indicating that collision occurs, and reserving a resource indicating that no collision occurs as an available resource.

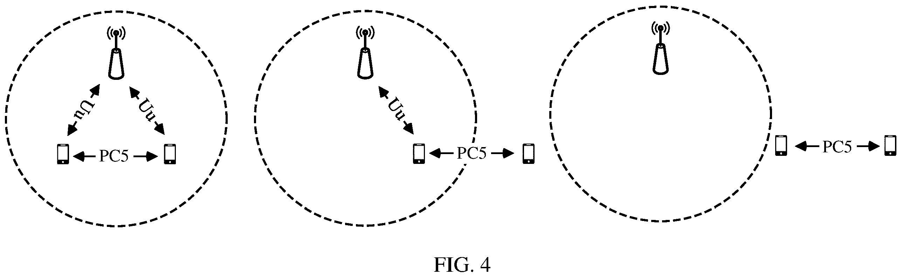

This application is applied to a V2X or D2D system in which a terminal apparatus directly communicates with the terminal apparatus, and is applicable to a communication scenario in which there is network coverage and a communication scenario in which there is no network coverage and a transmission mode in which the terminal apparatus independently selects a resource. The terminal apparatus may be within a coverage area of a network device, or may be outside a coverage area of a network device. FIG. 4 is a schematic diagram of a communication scenario to which an embodiment of this application is applicable. Two terminal apparatuses that send sidelink information and that receive sidelink information may be within a coverage area of a network device; in the two terminal apparatuses that send the sidelink information and that receive the sidelink information, one terminal apparatus may be within the coverage area of the network device, and the other terminal apparatus may be outside the coverage area of the network device; or both the two terminal apparatuses that send the sidelink information and that receive the sidelink information may be outside the coverage area of the network device. This is not limited in this application.

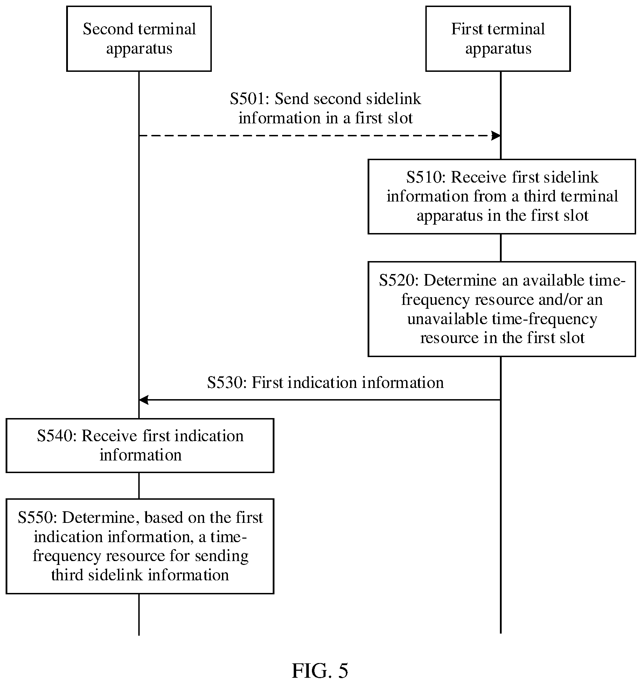

FIG. 5 is a schematic flowchart of interaction of a communication method according to an embodiment of this application.

S501: A second terminal apparatus sends second sidelink information in a first slot. It should be understood that the first slot may be one slot, or may be a plurality of slots. The first slot is a slot in a sensing window of the second terminal apparatus, and the sensing window is before a resource selection window for sending sidelink information.

The first slot includes at least one subchannel, the second terminal apparatus may send the second sidelink information by using at least one first subchannel in the first slot, and the at least one first subchannel belongs to the at least one subchannel.

S510: A first terminal apparatus receives first sidelink information from a third terminal apparatus in the first slot. It may be understood that the third terminal apparatus is another terminal except the first terminal and the second terminal. There may be one or more third terminal apparatuses that send the first sidelink information in the first slot, and the first terminal apparatus may receive at least one piece of first sidelink information sent by at least one third terminal apparatus in the first slot. The first sidelink information and the second sidelink information may be PSCCHs, or may be a PSCCH and a PSSCH. The second terminal in this embodiment of this application is a half-duplex apparatus. The first terminal apparatus, the second terminal apparatus, and the third terminal apparatus are terminal devices. The first terminal apparatus may be understood as an auxiliary terminal apparatus, and the second terminal apparatus may be understood as an assisted terminal apparatus.

Optionally, the first terminal apparatus receives the second sidelink information sent by the second terminal apparatus in the first slot, and determines, based on the second sidelink information received from the second terminal apparatus in the first slot, that the first slot is a slot in which the second terminal apparatus sends the second sidelink information. In some cases, the second terminal apparatus sends uplink information to a network device in the first slot instead of the second sidelink information in the first slot. In this case, the first slot is also a slot in which the second terminal apparatus sends information, and the second terminal apparatus sends indication information to notify the first terminal apparatus that the second terminal apparatus sends the uplink information to a network device in the first slot, or the second terminal apparatus notifies, by using the indication information, the first terminal apparatus that the first slot is the slot in which the second terminal apparatus sends the information.

The first terminal device performs sensing in the first slot, and receives the at least one piece of first sidelink information sent by the at least one third terminal apparatus. Alternatively, the first terminal apparatus learns of, based on resource reservation period information in sidelink information sent by the second terminal apparatus before the first slot, that the second terminal device needs to send the second sidelink information in the first slot, that is, the first terminal apparatus learns of that the second terminal device cannot perform sensing in the first slot. In this case, the first terminal device performs sensing in the first slot, and receives the at least one piece of first sidelink information sent by the at least one third terminal apparatus.

It should be understood that, in a sensing process, the first terminal apparatus senses SCI sent by another terminal apparatus other than the first terminal apparatus in each slot. Therefore, the first terminal apparatus can receive the second sidelink information sent by the second terminal apparatus at the same time when receiving the first sidelink information from the third terminal apparatus in the first slot, instead of sending of the second sidelink information by the second terminal apparatus triggering the first terminal apparatus to receive the first sidelink information from the third terminal apparatus, or sending the first sidelink information by the third terminal apparatus triggering the first terminal apparatus to receive the second sidelink information from the second terminal apparatus.

S520: The first terminal apparatus determines an available time-frequency resource and/or an unavailable time-frequency resource in the first slot based on the first sidelink information. The first terminal apparatus may determine only which time-frequency resources are available in a resource pool, may determine only which time-frequency resources are unavailable in a resource pool, or may determine both which time-frequency resources are available and which time-frequency resources are unavailable in a resource pool. This is not limited in this embodiment of this application. In this embodiment of this application, the available time-frequency resource may be a resource whose detected signal strength is less than a specific threshold, that is, the resource is considered not occupied and is available. On the contrary, the unavailable time-frequency resource may be a resource whose detected signal strength is greater than a specific threshold, that is, the resource is considered occupied and is unavailable.

Optionally, the first terminal apparatus may determine, based on the at least one piece of first sidelink information received from the at least one third terminal apparatus, available time-frequency resources and/or unavailable time-frequency resources on a remaining subchannel other than the at least one first subchannel on all subchannels of the first slot. It should be understood that, if the second terminal apparatus sends the second sidelink information in the first slot by using the at least one first subchannel, the first terminal apparatus may not care about whether the at least one first subchannel is an available time-frequency resource for the second terminal apparatus, and the second terminal apparatus may determine whether the at least one first subchannel is the available time-frequency resource.

Specifically, the first terminal apparatus may determine, based on a first threshold, the available time-frequency resources and/or the unavailable time-frequency resources on the remaining subchannel other than the at least one first subchannel on all the subchannels of the first slot. The remaining subchannel other than the at least one first subchannel on all the subchannels of the first slot may be referred to as a second subchannel, and there may be one or more second subchannels.

The first threshold may be a threshold $Th(pi, pi)$ determined by the first terminal apparatus based on priority information carried in SCI sent by the second terminal apparatus, or may be a threshold $Th(pi, pi)$ determined by the first terminal apparatus based on priority information configured by a network or preconfigured priority information. For example, a value of the priority information configured by the network or preconfigured priority information may be any one of 1, 2, 3, 4, 5, 6, 7, and 8. Specifically, a method for determining the threshold based on the priority information may be as follows: $Th(pi, pi)$ is a function value with variables $pi$ and $pi$, where $pi$ is a priority value carried in the received SCI sent by the third terminal apparatus, and $pi$ is a priority value carried in the SCI sent by the second terminal apparatus or a priority value configured by the network or a preconfigured priority value. The network device configures or preconfigures a threshold set, where the threshold set includes a plurality of thresholds, and a value of $Th(pi, pi)$ is an $i^{th}$ threshold in the plurality of thresholds in the threshold set, where $i = p_i + (p_i - 1)*8$.

In an implementation, the first terminal apparatus receives, in the first slot, the first sidelink information sent by the third terminal apparatus by using the second subchannel, and the first terminal apparatus measures reference signal received power RSRP on the second subchannel. Specifically, the first terminal apparatus may perform RSRP measurement on a demodulation reference symbol (demodulation reference signal, DMRS) of the PSSCH, and determine, based on comparison between the RSRP and the first threshold, whether the second subchannel is the available time-frequency resource. If the RSRP is greater than the first threshold, the first terminal apparatus determines that the second subchannel is the unavailable time-frequency resource; or if the RSRP is less than or equal to the first threshold, the first terminal apparatus determines that the second subchannel is the available time-frequency resource.

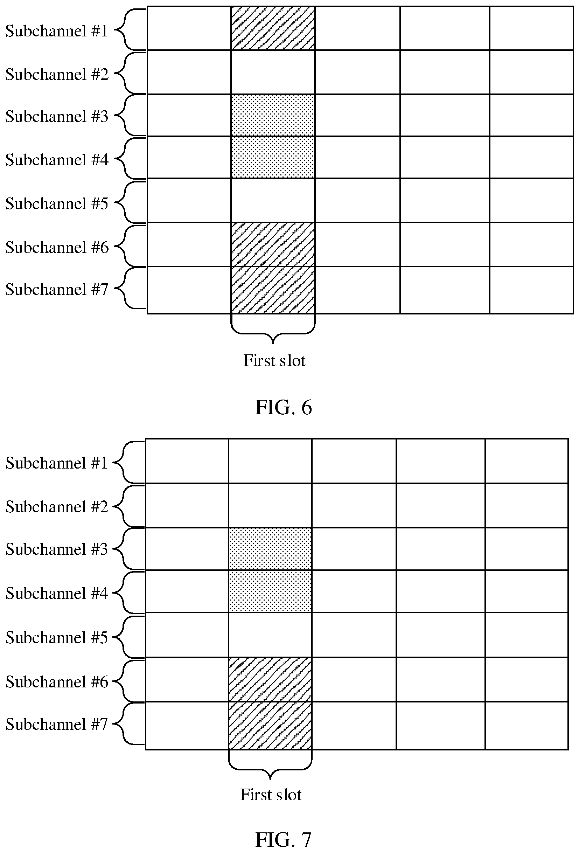

For example, the first terminal apparatus determines that a resource pool preconfigured by the network device includes seven subchannels, including a subchannel #1, a subchannel #2, a subchannel #3, a subchannel #4, a subchannel #5, a subchannel #6, and a subchannel #7, and the first terminal apparatus may sense each subchannel in the first slot. The first terminal apparatus receives the second sidelink information sent by the second terminal apparatus, and determines that a PSSCH sent by the second terminal apparatus occupies two subchannels, namely, the subchannel #3 and the subchannel #4. In this case, the first terminal apparatus only needs to determine an available time-frequency resource and/or an unavailable time-frequency resource on another subchannel except the subchannel #3 and the subchannel #4. FIG. 6 is a schematic diagram of resource selection according to this embodiment of this application.

The first terminal apparatus receives the first sidelink information sent by UE-1, determines that a PSSCH sent by the UE-1 occupies the subchannel #6 and the subchannel #7, and separately measures reference signal received power RSRP on the subchannel #6 and the subchannel #7. If the measured RSRP is greater than the first threshold, it is determined that the subchannel #6 and the subchannel #7 are unavailable time-frequency resources. The first terminal apparatus receives the first sidelink information sent by UE-2, determines that a PSSCH sent by the UE-2 occupies the subchannel #1, and measures RSRP on the subchannel #1. If the RSRP is greater than the first threshold, it is determined that the subchannel #1 is an unavailable time-frequency resource. If the first terminal apparatus receives no first sidelink information on the subchannel #2 and the subchannel #5, it is determined that the subchannel #2 and the subchannel #5 are available time-frequency resources; or if the first terminal apparatus receives the first sidelink information on the subchannel #2 and the subchannel #5, but RSRP measured on the subchannel #2 and the subchannel #5 is less than or equal to the first threshold, it is determined that the subchannel #2 and the subchannel #5 are available time-frequency resources. Receiving no first sidelink information may also be understood as that no other terminal apparatus sends the first sidelink information or the first sidelink information sent by another terminal apparatus cannot be correctly decoded, and receiving the first sidelink information may be understood as that the first sidelink information is successfully decoded. The UE-1 and the UE-2 are the third terminal apparatuses.

Therefore, the first terminal apparatus determines that the subchannel #1, the subchannel #6, and the subchannel #7 are the unavailable time-frequency resources, and determines that the subchannel #2 and the subchannel #5 are the available time-frequency resources. It may be understood that the unavailable time-frequency resource or the available time-frequency resource determined by the first terminal is for the second terminal apparatus. Because the second terminal apparatus does not perform sensing in the first slot, the first terminal apparatus helps or assists the second terminal apparatus in sensing in the first slot, and determines the unavailable time-frequency resource or the available time-frequency resource in the selection window of the second terminal apparatus.

In another implementation, the first terminal apparatus receives, in the first slot, the first sidelink information sent by the third terminal apparatus by using the second subchannel, and the first terminal apparatus measures reference signal received power RSRP on the second subchannel, and determines, based on the RSRP, a first threshold, and a resource reservation period included in the first sidelink information, whether the second subchannel is an available time-frequency resource. If the RSRP is greater than a first threshold, and SCI for scheduling data on the second subchannel, that is, a resource reservation period (resource reservation period) field included in the first sidelink information exists, and a value of a resource reservation period indication carried in a resource reservation period field is greater than 0, the first terminal apparatus determines that the second subchannel is an unavailable time-frequency resource; or if the RSRP is less than or equal to the first threshold, the first terminal apparatus determines that the second subchannel is the available time-frequency resource; or if a value of the resource reservation period indication included in the first sidelink information is equal to 0, or if there is no resource reservation period indication in the first sidelink information, the first terminal apparatus determines that the second subchannel is the available time-frequency resource.

For example, the first terminal apparatus determines that a resource pool preconfigured by the network device includes seven subchannels, including a subchannel #1, a subchannel #2, a subchannel #3, a subchannel #4, a subchannel #5, a subchannel #6, and a subchannel #7, and the first terminal apparatus may sense each subchannel in the first slot. The first terminal apparatus receives the second sidelink information sent by the second terminal apparatus, and determines that a PSSCH sent by the second terminal apparatus occupies two subchannels, namely, the subchannel #3 and the subchannel #4. In this case, the first terminal apparatus only needs to determine an available time-frequency resource and/or an unavailable time-frequency resource on another subchannel except the subchannel #3 and the subchannel #4. FIG. 7 is a schematic diagram of another resource selection according to this embodiment of this application.

The first terminal apparatus receives the first sidelink information sent by UE-1, determines that a PSSCH sent by the UE-1 occupies the subchannel #6 and the subchannel #7, and separately measures reference signal received power RSRP on the subchannel #6 and the subchannel #7. If the measured RSRP is greater than the first threshold, it indicates that the subchannel #6 and the subchannel #7 are occupied in the first slot; and if a value of a resource reservation period indication included in the first sidelink information is greater than 0, it indicates that a conflict is caused to future resource selection of the second terminal apparatus. It is determined that the subchannel #6 and the subchannel #7 are unavailable time-frequency resources. The first terminal apparatus receives the first sidelink information sent by UE-2, determines that a PSSCH sent by the UE-2 occupies the subchannel #1, and measures RSRP on the subchannel #1. If the RSRP is greater than the first threshold, and a value of a resource reservation period indication included in the first sidelink information is equal to 0, or the first sidelink information includes no resource reservation period indication, it indicates that although the subchannel #1 is occupied in the first slot, no conflict is caused to future resource selection of the second terminal apparatus. It is determined that the subchannel #1 is an available time-frequency resource. If the first terminal apparatus receives no first sidelink information on the subchannel #2 and the subchannel #5, it is determined that the subchannel #2 and the subchannel #5 are available time-frequency resources; or if the first terminal apparatus receives the first sidelink information on the subchannel #2 and the subchannel #5, but RSRP measured on the subchannel #2 and the subchannel #5 is less than or equal to the first threshold, in this case, regardless of whether a value of a resource reservation period indication included in the first sidelink information is equal to 0 or greater than 0, no conflict is caused to future resource selection of the second terminal apparatus, and it is determined that the subchannel #2 and the subchannel #5 are available time-frequency resources. The UE-1 and the UE-2 are the third terminal apparatuses.

Therefore, the first terminal apparatus determines that the subchannel #6 and the subchannel #7 are the unavailable time-frequency resources, and determines that the subchannel #1, the subchannel #2, and the subchannel #5 are the available time-frequency resources.

Optionally, the first terminal apparatus may determine available time-frequency resources and/or unavailable time-frequency resources on all subchannels of the first slot based on the first sidelink information and the second sidelink information.

Specifically, the first terminal apparatus may determine, based on a first threshold, an available time-frequency resource and/or an unavailable time-frequency resource on a remaining subchannel other than the at least one first subchannel on all the subchannels of the first slot. The first terminal apparatus may determine an available time-frequency resource and/or an unavailable time-frequency resource on the at least one first subchannel based on a second threshold, where the second threshold is greater than the first threshold. The remaining subchannel other than the at least one first subchannel on all the subchannels of the first slot may be referred to as a second subchannel, and there may be one or more second subchannels. In an implementation, the second threshold=the first threshold+an offset value, where the offset value may be configured by the network device, or preconfigured, or predefined (for example, the offset value=3 dB). A value of the offset value is a positive number, and a unit of the offset value is dB.

The first threshold may be a threshold determined by the first terminal apparatus based on priority information carried in SCI sent by the second terminal apparatus, or may be a threshold determined by the first terminal apparatus based on priority information configured by a network or preconfigured priority information. For example, a value is any one of 1, 2, 3, 4, 5, 6, 7, and 8.

The second threshold may be configured by the network device, for example, configured by using RRC signaling, or may be preconfigured by the network device, or may be configured by the first terminal apparatus for the second terminal apparatus, for example, by using PC-5 RRC signaling or SCI information, or may be configured by the second terminal apparatus for the first terminal apparatus, or may be determined based on priority information of the first terminal apparatus and/or the second terminal apparatus. This is not limited in this embodiment of this application.

A specific process in which the first terminal apparatus determines, based on the first threshold, the available time-frequency resource and/or the unavailable time-frequency resource on the remaining subchannel other than the at least one first subchannel on all the subchannels of the first slot is the same as that described above.

In an implementation, the first terminal apparatus receives, in the first slot, the second sidelink information sent by the second terminal apparatus by using the at least one first subchannel, and the first terminal apparatus measures reference signal received power RSRP on the at least one first subchannel, and determines, based on comparison between the RSRP and the second threshold, whether the at least one first subchannel is the available time-frequency resource. If the RSRP is greater than the second threshold, it indicates that a subchannel resource conflict occurs, that is, more than one terminal apparatus use, in the first slot, the at least one first subchannel to send sidelink information, and the first terminal apparatus determines that the at least one first subchannel is the unavailable time-frequency resource; or if the RSRP is less than or equal to the second threshold, it indicates that only the second terminal apparatus uses, in the first slot, the at least one first subchannel to send sidelink information, and the first terminal apparatus determines that the at least one first subchannel is the available time-frequency resource.

For example, the first terminal apparatus determines that a resource pool preconfigured by the network device includes seven subchannels, including a subchannel #1, a subchannel #2, a subchannel #3, a subchannel #4, a subchannel #5, a subchannel #6, and a subchannel #7. The first terminal apparatus may sense each subchannel in the first slot, to determine an available time-frequency resource and/or an unavailable time-frequency resource on the seven subchannels of the first slot. The first terminal apparatus receives the second sidelink information sent by the second terminal apparatus, determines that a PSSCH sent by the second terminal apparatus occupies two subchannels, namely, the subchannel #3 and the subchannel #4, and separately measures reference signal received power RSRP on the subchannel #3 and the subchannel #4. If the measured RSRP is greater than the second threshold, it indicates that a resource conflict occurs between the subchannel #3 and the subchannel #4, and it is determined that the subchannel #3 and the subchannel #4 are unavailable time-frequency resources. The first terminal apparatus receives the first sidelink information sent by UE-1, determines that a PSSCH sent by the UE-1 occupies the subchannel #6 and the subchannel #7, and separately measures reference signal received power RSRP on the subchannel #6 and the subchannel #7. If the measured RSRP is greater than the first threshold, it is determined that the subchannel #6 and the subchannel #7 are unavailable time-frequency resources. The first terminal apparatus receives the first sidelink information sent by UE-2, determines that a PSSCH sent by the UE-2 occupies the subchannel #1, and measures RSRP on the subchannel #1. If the RSRP is greater than the first threshold, it is determined that the subchannel #1 is an unavailable time-frequency resource. If the first terminal apparatus receives no first sidelink information on the subchannel #2 and the subchannel #5, it is determined that the subchannel #2 and the subchannel #5 are available time-frequency resources; or if the first terminal apparatus receives the first sidelink information on the subchannel #2 and the subchannel #5, but RSRP measured on the subchannel #2 and the subchannel #5 is less than or equal to the first threshold, it is determined that the subchannel #2 and the subchannel #5 are available time-frequency resources. The UE-1 and the UE-2 are the third terminal apparatuses. Therefore, the first terminal apparatus determines that the subchannel #1, the subchannel #3, the subchannel #4, the subchannel #6, and the subchannel #7 are the unavailable time-frequency resources, and determines that the subchannel #2 and the subchannel #5 are the available time-frequency resources.

For another example, the first terminal apparatus determines that a resource pool preconfigured by the network device includes seven subchannels, including a subchannel #1, a subchannel #2, a subchannel #3, a subchannel #4, a subchannel #5, a subchannel #6, and a subchannel #7. The first terminal apparatus may sense each subchannel in the first slot, to determine an available time-frequency resource and/or an unavailable time-frequency resource on the seven subchannels of the first slot. The first terminal apparatus receives the second sidelink information sent by the second terminal apparatus, determines that a PSSCH sent by the second terminal apparatus occupies two subchannels, namely, the subchannel #3 and the subchannel #4, and separately measures reference signal received power RSRP on the subchannel #3 and the subchannel #4. If the measured RSRP is greater than the second threshold, it indicates that a resource conflict occurs between the subchannel #3 and the subchannel #4, and it is determined that the subchannel #3 and the subchannel #4 are unavailable time-frequency resources. The first terminal apparatus receives the first sidelink information sent by UE-1, determines that a PSSCH sent by the UE-1 occupies the subchannel #6 and the subchannel #7, and separately measures reference signal received power RSRP on the subchannel #6 and the subchannel #7. If the measured RSRP is greater than the first threshold, it indicates that the subchannel #6 and the subchannel #7 are occupied in the first slot; and if a value of a resource reservation period indication included in the first sidelink information is greater than 0, it indicates that a conflict is caused to future resource selection of the second terminal apparatus. It is determined that the subchannel #6 and the subchannel #7 are unavailable time-frequency resources. The first terminal apparatus receives the first sidelink information sent by UE-2, determines that a PSSCH sent by the UE-2 occupies the subchannel #1, and measures RSRP on the subchannel #1. If the RSRP is greater than the first threshold, and a value of a resource reservation period indication included in the first sidelink information is equal to 0, or the first sidelink information includes no resource reservation period indication, it indicates that although the subchannel #1 is occupied in the first slot, no conflict is caused to future resource selection of the second terminal apparatus. It is determined that the subchannel #1 is an available time-frequency resource. If the first terminal apparatus receives no first sidelink information on the subchannel #2 and the subchannel #5, it is determined that the subchannel #2 and the subchannel #5 are available time-frequency resources; or if the first terminal apparatus receives the first sidelink information on the subchannel #2 and the subchannel #5, but RSRP measured on the subchannel #2 and the subchannel #5 is less than or equal to the first threshold, in this case, regardless of whether a value of a resource reservation period indication included in the first sidelink information is equal to 0 or greater than 0, no conflict is caused to future resource selection of the second terminal apparatus, and it is determined that the subchannel #2 and the subchannel #5 are available time-frequency resources. The UE-1 and the UE-2 are the third terminal apparatuses. Therefore, the first terminal apparatus determines that the subchannel #3, the subchannel #4, the subchannel #6, and the subchannel #7 are the unavailable time-frequency resources, and determines that the subchannel #1, the subchannel #2, and the subchannel #5 are the available time-frequency resources.

In another implementation, the first terminal apparatus receives the second sidelink information sent by the second terminal apparatus in the first slot by using the at least one first subchannel, but the first terminal apparatus cannot correctly decode or fails to decode the second sidelink information. In this case, it is considered that another terminal apparatus other than the second terminal apparatus sends sidelink information by using the first subchannel. It indicates that a conflict occurs on the first subchannel resource, and the first terminal apparatus determines that the at least one first subchannel is the unavailable time-frequency resource.

Optionally, the first terminal apparatus may determine the available time-frequency resources and/or the unavailable time-frequency resources on all the subchannels of the first slot based on only the first sidelink information. A subchannel occupied by the at least one piece of first sidelink information that is sent by at least one of the third terminal apparatuses and that is received by the first terminal apparatus may conflict with a subchannel occupied by the second terminal apparatus to send the second sidelink information. Therefore, the first terminal apparatus can alternatively determine, based on only the first sidelink information, the available time-frequency resources and/or the unavailable time-frequency resources on all the subchannels of the first slot.

Likewise, the first terminal apparatus may further determine available the time-frequency resources and/or the unavailable time-frequency resources on all the subchannels of the first slot based on only the second sidelink information.

S530: The first terminal apparatus sends first indication information to the second terminal apparatus, where the first indication information indicates the available time-frequency resource and/or the unavailable time-frequency resource in the first slot. In other words, the first indication information indicates an available subchannel and/or an unavailable subchannel in the first slot.

Optionally, the first indication information may indicate the available time-frequency resources on all the subchannels of the first slot, may indicate the unavailable time-frequency resources on all the subchannels of the first slot, or may indicate the available time-frequency resources and the unavailable time-frequency resources on all the subchannels of the first slot.

Optionally, the first indication information may indicate the available time-frequency resource on the remaining subchannel other than the at least one first subchannel on all the subchannels of the first slot, or may indicate the unavailable time-frequency resource on the remaining subchannel other than the at least one first subchannel on all the subchannels of the first slot, or may indicate the available time-frequency resource and the unavailable time-frequency resource on the remaining subchannel other than the at least one first subchannel on all the subchannels of the first slot.

The time-frequency resource may be reflected on one or more subchannels of the first slot. The first indication information may include N bits, and N is a quantity of subchannels for sending sidelink information in the resource pool, or N is a quantity of subchannels other than the first subchannel in the resource pool, that is, a quantity of second subchannels. Each of the N bits may be in a one-to-one correspondence with each subchannel in the resource pool, or may be in a one-to-one correspondence with each subchannel other than the first subchannel in the resource pool, and indicates whether the subchannel is available. For example, when a value of a bit is "1", it indicates that a subchannel corresponding to the bit is unavailable; or when a value of a bit is "0", it indicates that a subchannel corresponding to the bit is available; and vice versa.

Optionally, the first terminal apparatus may send the first indication information to the second terminal apparatus on a physical sidelink feedback channel (physical sidelink feedback channel, PSFCH). A PSFCH resource for carrying the first indication information may be provided by resource pool configuration information. PSFCH resources are orthogonal (orthogonal), that is, the PSFCH resources do not overlap.

In an implementation, one PSFCH resource includes one physical resource block (physical resource block, PRB), and the first terminal apparatus may send N consecutive or discrete PSFCHs carrying N pieces of bit information, that is, each PRB carries one piece of bit information.

In another implementation, one PSFCH resource includes N PRBs, and the first terminal apparatus may send the PSFCH carrying N pieces of bit information.

Specifically, the one piece of bit information may indicate, through different cyclic shift (cyclic shift) manners of a sequence, that a bit information value is "1" or "0". A time domain resource of the PSFCH carrying the first indication information is after the first slot, a spacing between the time domain resource of PSFCH and the first slot is not less than K slots, a value of K is a positive integer greater than or equal to 0, and K may be carried in configuration information of the resource pool, for example, a value of K is 2 or 3. For the bit information corresponding to the subchannel occupied by the second terminal apparatus to send the PSSCH in the first slot, the first terminal apparatus may not send the bit information, or specify to send a specific value, for example, "1" or "0". The second terminal apparatus does not interpret or process the bit information, because the second terminal apparatus knows that the second terminal apparatus uses the subchannel corresponding to the bit information to transmit the PSSCH.

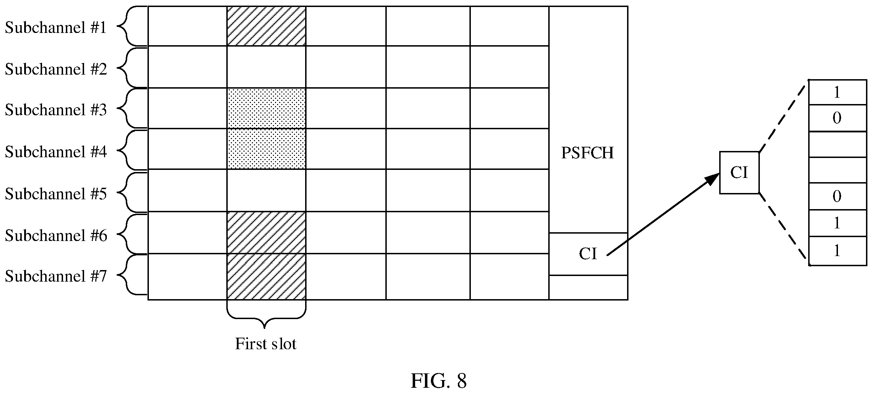

FIG. 8 is a schematic diagram of sending first indication information according to an embodiment of this application. For example, if a resource pool includes seven subchannels, the resource pool includes seven pieces of bit information indicating whether each subchannel in the seven subchannels is an available time-frequency resource. A first piece of bit information and a second piece of bit information correspond to a subchannel #1 and a subchannel #2, and sequences whose corresponding bit information values are "1" and "0" are sent. A first terminal apparatus does not send a third piece of bit information and a fourth piece of bit information, and remaining bit information values are "0" or "1" and indicate whether a corresponding subchannel #5, a corresponding subchannel #6, and a corresponding subchannel #7 are available. The bit information may be all carried in a PSFCH resource. An interval between a time domain resource of a PSFCH and a slot m is greater than or equal to a configured value of K. In FIG. 8, the value of K is 3. It should be noted that the PSFCH carrying the first indication information is merely an example. The first indication information may be also carried in a PSCCH or a PSSCH, for example, may be also carried in second-level SCI, a MAC CE, or PC5-RRC.

S540: The second terminal apparatus receives the first indication information from the first terminal apparatus. Specifically, the second terminal apparatus may receive the first indication information from the first terminal apparatus on the physical sidelink feedback channel PSFCH.

S550: The second terminal apparatus determines, based on the first indication information, a time-frequency resource that is in the resource selection window and that is for sending third sidelink information. Specifically, the second terminal apparatus excludes, based on the first indication information, an unavailable time-frequency resource that is in the resource selection window and that is a reserved time-frequency resource determined based on a resource reservation period indication, and sends the third sidelink information by using the available time-frequency resource. A slot in which the third sidelink information is sent is a slot after the first slot.

It is assumed that values of the configured resource reservation period indications are $P_1$ and $P_2$. Correspondingly, values of logical resource reservation period indications in the resource pool are $P_1^{'}$ and $P_2^{'}$, and the first slot is a slot m. The second terminal apparatus may exclude, from the resource selection window, subchannels indicated as unavailable by the first indication information in slots $m+P_1^{'}$ and $m+P_2^{'}$, and determine subchannels indicated as available by the first indication information in the slots $m+P_1^{'}$ and $m+P_2^{'}$ as the available time-frequency resource. Optionally, if the second terminal apparatus also sends the second information periodically in the first slot, the second terminal apparatus may exclude at least one first subchannel in the slot $m+P_1^{'}$ or the slot $m+P_2^{'}$ based on an actual value of the resource reservation period indication included in the second information.

The second terminal apparatus may also exclude the unavailable time-frequency resource based on a resource actually occupied by the second terminal apparatus. Optionally, if the second terminal apparatus reserves only in the slot $m+P_1^{'}$, the second terminal apparatus may exclude only a subchannel indicated as unavailable by the first indication information in the slot $m+P_1^{'}$, and determine a subchannel indicated as available by the first indication information in the slot $m+P_1^{'}$ as the available time-frequency resource; or if the second terminal apparatus reserves only the slot $m+P_2^{'}$, the second terminal apparatus may exclude only a subchannel indicated as unavailable by the first indication information in the slot $m+P_2^{'}$, and determine a subchannel indicated as available by the first indication information in the slot $m+P_2^{'}$ as the available time-frequency resource.

If the first indication information sent by the first terminal apparatus indicates that at least one first subchannel on which the second terminal apparatus sends the second sidelink information in the first slot is the unavailable time-frequency resource, that is, the first terminal device determines that the at least one first subchannel is a conflicted time-frequency resource, or the first terminal device fails to decode the received second sidelink information, the second terminal apparatus may exclude the at least one first subchannel in the slot $m+P_1^{'}$ and the slot $m+P_2^{'}$, and reselect the available subchannel to send the third sidelink information.

If the first indication information sent by the first terminal apparatus indicates that the at least one first subchannel on which the second terminal apparatus sends the second sidelink information in the first slot is the unavailable time-frequency resource, but the second terminal apparatus receives positive acknowledgment (acknowledgement, ACK) information that is for the second sidelink information and that is sent by another terminal apparatus, the second terminal apparatus may use the first subchannel to send the third sidelink information in the slot $m+P_1^{'}$ and the slot $m+P_2^{'}$.

If the first indication information sent by the first terminal apparatus indicates that the at least one first subchannel on which the second terminal apparatus sends the second sidelink information in the first slot is the unavailable time-frequency resource, and the second terminal apparatus receives negative acknowledgment (negative acknowledgement, NACK) information that is for the second sidelink information and that is sent by another terminal apparatus, the second terminal apparatus does not use the at least one first subchannel to send the third sidelink information in the slot $m+P_1^{'}$ and the slot $m+P_2^{'}$.

In addition to a case in which the terminal apparatus does not sense a slot due to a half-duplex problem, and it is also possible that, due to energy saving, the terminal apparatus may sense some slots in a time period including consecutive slots to perform resource selection, and resource selection includes partial sensing (partial sensing) resource selection and configuring DRX (Discontinuous Reception) for discontinuous reception resource selection. For ease of description, resource selection based on partial sensing is used to describe the foregoing resource selection manner. In the time period, because the terminal apparatus determines a sensing result based on only some slots, the sensing result cannot

entirely reflect a complete time-frequency resource reservation status in the time period. Consequently, a time-frequency resource selected in the selection window may collide with a resource reserved by another terminal apparatus. A solution is as follows: A time-frequency resource for sending to-be-sent SL information in a slot m is selected, and the terminal apparatus performs resource re-evaluation and preemption detection in the slot m-$T_3$, where $T_3 = T_{proc,1}^{SL}$, and a value of $T_{proc,1}^{SL}$ is determined in Table 1. To be specific, before the to-be-sent data is sent, performing re-evaluation and preemption detection on the time-frequency resource for sending the to-be-sent SL information includes: sensing at least the slot m-$T_3$; determining whether a time-frequency resource indicated by sidelink control information received in the slot m-$T_3$ overlaps the time-frequency resource for sending the to-be-sent SL information in the slot m; and if the two time-frequency resources overlap, performing reselection (re-select) on the overlapped time-frequency resource; or if the two time-frequency resources do not overlap, sending the to-be-sent SL information in the slot m. If the terminal apparatus performs, before each time of sending the to-be-sent SL information, re-evaluation and preemption detection on the time-frequency resource that is selected in a manner of performing resource selection based on partial sensing and that is for sending the to-be-sent SL information, energy consumption caused by sensing and decoding is large, and energy saving cannot be implemented. Therefore, the terminal apparatus may determine, based on some trigger conditions, to perform re-evaluation and preemption detection at least in the slot m-$T_3$, so as to determine, for reselection, a time-frequency resource that is in the slot m and that is for sending the to-be-sent SL information. To be specific, before the to-be-sent SL information is sent, it is determined, based on a trigger condition, to perform re-evaluation and preemption detection on the time-frequency resource for sending the to-be-sent SL information, where the trigger condition includes:

**[0125]** The terminal apparatus determines, based on feedback information received before the to-be-sent SL information is sent, to perform re-evaluation and preemption detection on the time-frequency resource for sending the to-be-sent SL information, where the feedback information includes HARQ feedback information, and the HARQ feedback information indicates a receiving state of data sent before the to-be-sent SL information is sent. For example, if the data is correctly received by a receiving terminal apparatus of the data, an ACK feedback of the receiving terminal apparatus is received; or if the data is not correctly received by the receiving terminal apparatus of the data, a NACK feedback of the receiving terminal apparatus is received. Specifically, when the terminal apparatus continuously receives, in a period of time before sending the to-be-sent SL information, $N_1$ or more than $N_1$ NACK feedbacks, the terminal apparatus triggers re-evaluation and preemption detection on the time-frequency resource for sending the to-be-sent SL information; or when the terminal apparatus totally receives, in a period of time before sending the to-be-sent SL information, $N_2$ or more than $N_2$ NACK feedbacks, the terminal apparatus triggers re-evaluation and preemption detection on the time-frequency resource for sending the to-be-sent SL information. The terminal apparatus obtains $N_1$ and $N_2$ based on configuration information of the network side device, or in a preconfigured, or predefined manner. The period of time includes a plurality of consecutive slots, and a quantity of the plurality of slots may be configured, preconfigured, or predefined by the network side device. In a period of time, a quantity of continuously received pieces of HARQ feedback information or a quantity of totally received pieces of HARQ feedback information may reflect a current channel interference level to some extent. To be specific, a higher channel interference level indicates a higher probability of resource selection collision. Consequently, a collision of sent data is caused. In this case, re-evaluation and preemption detection can be performed to send a selected time-frequency resource collision in advance, trigger resource reselection, reduce collision, and improve data transmission reliability. On the contrary, a lower channel interference level indicates a lower probability of resource selection collision. In consideration of energy saving, re-evaluation and preemption detection are not required. It should be understood that the terminal apparatus may be the first terminal apparatus, the second terminal apparatus, or the third terminal apparatus.

**[0126]** In another case, the second terminal apparatus is scheduled by the network device to perform uplink transmission in at least one slot in a sensing window of the first terminal apparatus. Due to a half-duplex limitation, the second terminal apparatus cannot perform sensing on a slot for uplink transmission. The first terminal apparatus cannot correctly decode the uplink information sent by the second terminal apparatus to the network device, and cannot determine that the slot (the first slot) for the uplink transmission is a slot in which the second terminal apparatus cannot perform sensing. In this case, the first terminal apparatus cannot send the first indication information to the second terminal apparatus to assist the second terminal apparatus in resource selection. A solution is as follows: When receiving uplink scheduling information from the network device, where the uplink scheduling information indicates a slot in which an uplink resource is located, the second terminal apparatus notifies the first terminal apparatus of the slot in which the uplink resource is located before the slot in which the uplink resource is located, where the slot in which the uplink resource is located is carried in fourth sidelink information. The fourth sidelink information may be sidelink control information (SCI), a sidelink MAC CE, or PC5-RRC signaling. To be specific, the first terminal apparatus obtains, by receiving the fourth sidelink information sent

by the second terminal apparatus, the slot for uplink transmission. The first terminal apparatus determines that the slot for uplink transmission is a first slot, and then performs sensing in the first slot, to determine the available time-frequency resource and/or the unavailable time-frequency resource in the first slot, and send, to the second terminal apparatus, the first indication information used to determine the time-frequency resource for sending the third sidelink information.

It should be understood that the second terminal apparatus may have a plurality of undetected slots in one sensing window. The first terminal apparatus may determine the first indication information by sensing in the plurality of undetected slots of the second terminal apparatus, or the first terminal apparatus may determine a plurality of pieces of first indication information, and send the plurality of pieces of first indication information to the second terminal apparatus. In this case, the second terminal apparatus may determine, based on the plurality of pieces of first indication information, the time-frequency resource that is in the resource selection window and that is for sending the third sidelink information.

In the technical solutions provided in embodiments of this application, because the second terminal apparatus sends the second sidelink information in the first slot, the second terminal apparatus cannot sense the time-frequency resource information used by the another terminal apparatus to send the sidelink information or time-frequency resource information reserved by the another terminal apparatus to send the sidelink information. The first terminal apparatus can learn of, by sensing in the first slot, the time-frequency resource information used by the another terminal apparatus (including the second terminal apparatus and/or the at least one third terminal apparatus) to send the sidelink information or the time-frequency resource information reserved by the another terminal apparatus (including the second terminal apparatus and/or the at least one third terminal apparatus) to send the sidelink information, and indicate, the determined available time-frequency resource and/or unavailable time-frequency resource, to the second terminal apparatus by using the first indication information. This can avoid the second terminal apparatus excluding all available periodic time-frequency resources based on the resource reservation period indication, increase the available time-frequency resources, and improve resource utilization. In addition, an increase in the available resources can reduce a collision probability of resources selected by different terminal apparatuses, and can improve transmission reliability.

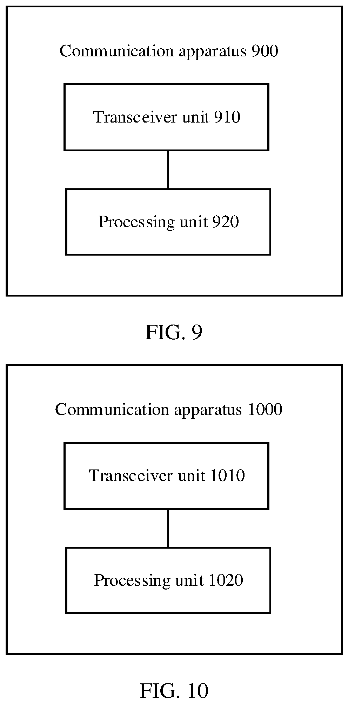

An embodiment of this application provides a communication apparatus 900. The communication apparatus is applied to the first terminal apparatus in the method embodiment in FIG. 5, or may be a component, for example, a chip, for implementing the method in the embodiment in FIG. 5. FIG. 9 is a schematic block diagram of a communication apparatus 900 according to an embodiment of this application. The communication apparatus 900 includes:

a transceiver unit 910, configured to receive first sidelink information from a third terminal apparatus in a first slot; and
a processing unit 920, configured to determine an available time-frequency resource and/or an unavailable time-frequency resource in the first slot based on the first sidelink information, where
the transceiver unit 910 is further configured to send first indication information to a second terminal apparatus, the first indication information indicates the available time-frequency resource and/or the unavailable time-frequency resource in the first slot, and the first slot is a slot in which the second terminal apparatus sends second sidelink information.

In this embodiment of this application, the transceiver unit may be a sending unit when performing a sending step, and may be a receiving unit when performing a receiving step. In addition, the transceiver unit may be replaced by a transceiver, the sending unit may be replaced by a transmitter, and the receiving unit may be replaced by a receiver.

Optionally, the transceiver unit 910 is further configured to receive the second sidelink information from the second terminal apparatus in the first slot; and the processing unit 920 is further configured to determine, based on the second sidelink information received from the second terminal apparatus in the first slot, that the first slot is the slot in which the second terminal apparatus sends the second sidelink information.

Optionally, the first slot is located in a sensing window of the second terminal apparatus.

Optionally, the first slot includes at least one subchannel, at least one first subchannel in the first slot is used by the second terminal apparatus to send the second sidelink information, and the at least one first subchannel belongs to the at least one subchannel.

Optionally, the processing unit 920 is specifically configured to: determine available time-frequency resources and/or unavailable time-frequency resources on all subchannels of the first slot based on the first sidelink information and/or the second sidelink information; or determine, based on the first sidelink information, an available time-frequency resource and/or an unavailable time-frequency resource on a remaining subchannel other than the at least one first subchannel on all the subchannels of the first slot.

Optionally, the first indication information indicates the available time-frequency resources and/or the unavailable time-frequency resources on all the subchannels of the first slot; or
the first indication information indicates the available time-frequency resource and/or the unavailable time-frequency resource on the remaining subchannel other than the at least one first subchannel on all the subchannels of the first slot.

Optionally, the processing unit 920 is specifically configured to:

determine, based on a first threshold, the available time-frequency resource and/or the unavailable time-frequency resource on the remaining subchannel other than the at least one first subchannel on all the subchannels of the first slot; and
determine an available time-frequency resource and/or an unavailable time-frequency resource on the at least one first subchannel based on a second threshold, where the second threshold is greater than the first threshold.

Optionally, the transceiver unit 910 is further configured to send the first indication information to the second terminal apparatus on a physical sidelink feedback channel.

An embodiment of this application provides another communication apparatus 1000. The communication apparatus is applied to the second terminal apparatus in the method embodiment in FIG. 5, or may be a component, for example, a chip, for implementing the method in the embodiment in FIG. 5. FIG. 10 is a schematic block diagram of a communication apparatus 1000 according to an embodiment of this application. The communication apparatus 1000 includes:

a transceiver unit 1010, configured to send second sidelink information to a first terminal apparatus in a first slot, where
the transceiver unit 1010 is further configured to receive first indication information from the first terminal apparatus, the first indication information indicates an available time-frequency resource and/or an unavailable time-frequency resource in the first slot, and the available time-frequency resource and/or the unavailable time-frequency resource in the first slot are/is determined by the first terminal apparatus based on first sidelink information received from a third terminal apparatus in the first slot; and
a processing unit 1020, configured to determine, based on the first indication information, a time-frequency resource for sending third sidelink information.

Optionally, the first slot is located in a sensing window of the second terminal apparatus.

Optionally, the first slot includes at least one subchannel, the second terminal apparatus sends the second sidelink information to the first terminal apparatus on at least one first subchannel in the first slot, and the at least one first subchannel belongs to the at least one subchannel.

Optionally, the first indication information indicates available time-frequency resources and/or unavailable time-frequency resources on all subchannels of the first slot; or

the first indication information indicates an available time-frequency resource and/or an unavailable time-frequency resource on a remaining subchannel other than the at least one first subchannel on all the subchannels of the first slot.

Optionally, the available time-frequency resource and/or the unavailable time-frequency resource on the remaining subchannel other than the at least one first subchannel on all the subchannels of the first slot are/is determined based on a first threshold; and

an available time-frequency resource and/or an unavailable time-frequency resource on the at least one first subchannel are/is determined based on a second threshold, and the second threshold is greater than the first threshold.

Optionally, the transceiver unit 1010 is further configured to receive the first indication information from the first terminal apparatus on a physical sidelink feedback channel.

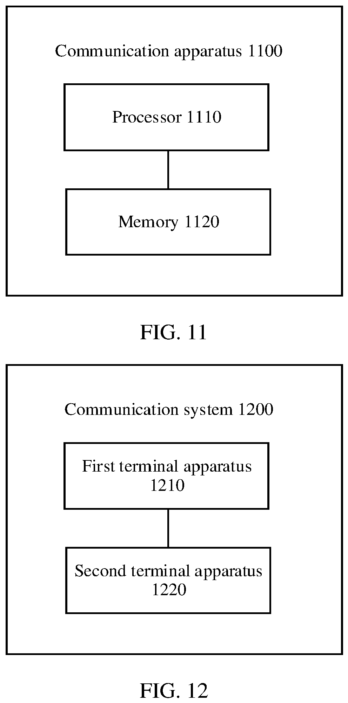

An embodiment of this application provides a communication apparatus 1100. FIG. 11 is a schematic block diagram of another communication apparatus according to an embodiment of this application. The communication apparatus 1100 includes a processor 1110. The processor 1110 is coupled to at least one memory 1120, and the processor 1110 is configured to read a computer program stored in the at least one memory 1120, to perform the method in any possible implementation of embodiments of this application.

The processor 1110 may be an integrated circuit chip and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory 1120 in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAM are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application provides a communication chip, including a processor and a communication interface. The processor is configured to read instructions or a computer program to perform the method in embodiments of this application.

An embodiment of this application provides a communication system 1200, including a first terminal apparatus 1210 and a second terminal apparatus 1220 in the communication method provided in embodiments of this application. FIG. 12 is a schematic block diagram of the communication system 1200 according to this embodiment of this application.

An embodiment of this application further provides a computer-readable storage medium. The computer-readable storage medium stores a computer program used to implement the method in embodiments of this application. When the computer program is run on a computer, the computer is enabled to implement the method in the foregoing method embodiments.

An embodiment of this application further provides a computer program product. When the computer program product runs on a computer, the computer is enabled to perform the method in embodiments of this application.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when" and "if" both mean that the apparatus performs corresponding processing in an objective situation, and are not intended to limit time. The terms do not mean that the apparatus is required to have a determining action during implementation, and do not mean any other limitation.

A person skilled in the art may understand that various numbers such as "first" and "second" in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as "first" and "second" in this application are merely used for differentiation for ease of description, and are not used to limit the scope of embodiments of this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, and may be located in one position or distributed on a plurality of network units. Some or all of the units may be selected based on actual requirements to achieve the objectives of the solutions in the embodiments.

In addition, functional units in embodiments of this application may be integrated into one processing unit, each of the units may exist independently physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims. This application is subject to the protection scope of the claims.

**Claims**

1. A communication method, comprising:

   receiving, by a first terminal apparatus, first sidelink information from a third terminal apparatus in a first slot;
   determining, by the first terminal apparatus, an available time-frequency resource and/or an unavailable time-frequency resource in the first slot based on the first sidelink information; and
   sending, by the first terminal apparatus, first indication information to a second terminal apparatus, wherein the first indication information indicates the available time-frequency resource and/or the unavailable time-frequency resource in the first slot, and the first slot is a slot in which the second terminal apparatus sends second sidelink information.

2. The method according to claim 1, wherein the method further comprises:

   receiving, by the first terminal apparatus, the second sidelink information from the second terminal apparatus in the first slot; and
   determining, by the first terminal apparatus based on the second sidelink information received from the second terminal apparatus in the first slot, that the first slot is the slot in which the second terminal apparatus sends the second sidelink information.

3. The method according to claim 1 or 2, wherein the first slot is located in a sensing window of the second terminal apparatus.

4. The method according to claim 1 or 2, wherein the first slot comprises at least one subchannel, at least one first subchannel in the first slot is used by the second terminal apparatus to send the second sidelink information, and the at least one first subchannel belongs to the at least one subchannel.

5. The method according to claim 4, wherein the determining, by the first terminal apparatus, an available time-frequency resource and/or an unavailable time-frequency resource in the first slot based on the first sidelink information comprises:

   determining, by the first terminal apparatus, available time-frequency resources and/or unavailable time-frequency resources on all subchannels of the first slot based on the first sidelink information and/or the second sidelink information; or
   determining, by the first terminal apparatus based on the first sidelink information, an available time-frequency resource and/or an unavailable time-frequency resource on a remaining subchannel other than the at least one first subchannel on all the subchannels of the first slot.

6. The method according to claim 5, wherein

the first indication information indicates the available time-frequency resources and/or the unavailable time-frequency resources on all the subchannels of the first slot; or
the first indication information indicates the available time-frequency resource and/or the unavailable time-frequency resource on the remaining subchannel other than the at least one first subchannel on all the subchannels of the first slot.

7. The method according to claim 5, wherein

the first terminal apparatus determines, based on a first threshold, the available time-frequency resource and/or the unavailable time-frequency resource on the remaining subchannel other than the at least one first subchannel on all the subchannels of the first slot; and
the first terminal apparatus determines an available time-frequency resource and/or an unavailable time-frequency resource on the at least one first subchannel based on a second threshold, wherein the second threshold is greater than the first threshold.

8. The method according to claim 1 or 2, wherein the first terminal apparatus sends the first indication information to the second terminal apparatus on a physical sidelink feedback channel.

9. A communication method, comprising:

sending, by a second terminal apparatus, second sidelink information to a first terminal apparatus in a first slot;
receiving, by the second terminal apparatus, first indication information from the first terminal apparatus, wherein the first indication information indicates an available time-frequency resource and/or an unavailable time-frequency resource in the first slot, and the available time-frequency resource and/or the unavailable time-frequency resource in the first slot are/is determined by the first terminal apparatus based on first sidelink information received from a third terminal apparatus in the first slot; and
determining, by the second terminal apparatus based on the first indication information, a time-frequency resource for sending the third sidelink information.

10. The method according to claim 9, wherein the first slot is located in a sensing window of the second terminal apparatus.

11. The method according to claim 9 or 10, wherein the first slot comprises at least one subchannel, the second terminal apparatus sends the second sidelink information to the first terminal apparatus on at least one first subchannel in the first slot, and the at least one first subchannel belongs to the at least one subchannel.

12. The method according to any one of claims 9 to 11, wherein

the first indication information indicates available time-frequency resources and/or unavailable time-frequency resources on all subchannels of the first slot; or
the first indication information indicates an available time-frequency resource and/or an unavailable time-frequency resource on a remaining subchannel other than the at least one first subchannel on all the subchannels of the first slot.

13. The method according to claim 12, wherein

the available time-frequency resource and/or the unavailable time-frequency resource on the remaining subchannel other than the at least one first subchannel on all the subchannels of the first slot are/is determined based on a first threshold; and
an available time-frequency resource and/or an unavailable time-frequency resource on the at least one first subchannel are/is determined based on a second threshold, and the second threshold is greater than the first threshold.

14. The method according to claim 9 or 10, wherein the second terminal apparatus receives the first indication information from the first terminal apparatus on a physical sidelink feedback channel.

15. A first terminal apparatus, comprising:

a transceiver unit, configured to receive first sidelink information from a third terminal apparatus in a first slot; and
a processing unit, configured to determine an available time-frequency resource and/or an unavailable time-frequency resource in the first slot based on the first sidelink information, wherein the transceiver unit is further configured to send first indication information to a second terminal apparatus, the first indication information indicates the available time-frequency resource and/or the unavailable time-frequency resource in the first slot, and the first slot is a slot in which the second terminal apparatus sends second sidelink information.

**16.** The first terminal apparatus according to claim 15, wherein

the transceiver unit is further configured to receive the second sidelink information from the second terminal apparatus in the first slot; and the processing unit is further configured to determine, based on the second sidelink information received from the second terminal apparatus in the first slot, that the first slot is the slot in which the second terminal apparatus sends the second sidelink information.

**17.** The first terminal apparatus according to claim 15 or 16, wherein
the first slot is located in a sensing window of the second terminal apparatus.

**18.** The first terminal apparatus according to claim 15 or 16, wherein
the first slot comprises at least one subchannel, at least one first subchannel in the first slot is used by the second terminal apparatus to send the second sidelink information, and the at least one first subchannel belongs to the at least one subchannel.

**19.** The first terminal apparatus according to claim 18, wherein the processing unit is specifically configured to:

determine available time-frequency resources and/or unavailable time-frequency resources on all subchannels of the first slot based on the first sidelink information and/or the second sidelink information; or
determine, based on the first sidelink information, an available time-frequency resource and/or an unavailable time-frequency resource on a remaining subchannel other than the at least one first subchannel on all the subchannels of the first slot.

**20.** The first terminal apparatus according to claim 19, wherein

the first indication information indicates the available time-frequency resources and/or the unavailable time-frequency resources on all the subchannels of the first slot; or
the first indication information indicates the available time-frequency resource and/or the unavailable time-frequency resource on the remaining subchannel other than the at least one first subchannel on all the subchannels of the first slot.

**21.** The first terminal apparatus according to claim 19, wherein the processing unit is specifically configured to:

determine, based on a first threshold, the available time-frequency resource and/or the unavailable time-frequency resource on the remaining subchannel other than the at least one first subchannel on all the subchannels of the first slot; and
determine an available time-frequency resource and/or an unavailable time-frequency resource on the at least one first subchannel based on a second threshold, wherein the second threshold is greater than the first threshold.

**22.** The first terminal apparatus according to claim 15 or 16, wherein
the transceiver unit is further configured to send the first indication information to the second terminal apparatus on a physical sidelink feedback channel.

**23.** A second terminal apparatus, comprising:

a transceiver unit, configured to send second sidelink information to a first terminal apparatus in a first slot, wherein
the transceiver unit is further configured to receive first indication information from the first terminal apparatus, the first indication information indicates an available time-frequency resource and/or an unavailable time-frequency resource in the first slot, and the available time-frequency resource and/or the unavailable time-frequency resource in the first slot are/is determined by the first terminal apparatus based on first sidelink information received from a third terminal apparatus in the first slot; and
a processing unit, configured to determine, based on the first indication information, a time-frequency resource for sending third sidelink information.

**24.** The second terminal apparatus according to claim 23, wherein
the first slot is located in a sensing window of the second terminal apparatus.

**25.** The second terminal apparatus according to claim 23 or 24, wherein
the first slot comprises at least one subchannel, the second terminal apparatus sends the second sidelink information to the first terminal apparatus on at least one first subchannel in the first slot, and the at least one first subchannel belongs to the at least one subchannel.

**26.** The second terminal apparatus according to any one of claims 23 to 25, wherein

the first indication information indicates available time-frequency resources and/or unavailable time-frequency resources on all subchannels of the first slot; or

the first indication information indicates an available time-frequency resource and/or an unavailable time-frequency resource on a remaining subchannel other than the at least one first subchannel on all the subchannels of the first slot.

**27.** The second terminal apparatus according to claim 26, wherein

the available time-frequency resource and/or the unavailable time-frequency resource on the remaining subchannel other than the at least one first subchannel on all the subchannels of the first slot are/is determined based on a first threshold; and
an available time-frequency resource and/or an unavailable time-frequency resource on the at least one first subchannel are/is determined based on a second threshold, and the second threshold is greater than the first threshold.

**28.** The second terminal apparatus according to claim 23 or 24, wherein
the transceiver unit is further configured to receive the first indication information from the first terminal apparatus on a physical sidelink feedback channel.

**29.** A communication apparatus, comprising a processor, wherein the processor is coupled to at least one memory, and the processor is configured to read a computer program stored in the at least one memory, to perform the method according to any one of claims 1 to 8, or perform the method according to any one of claims 9 to 14.

**30.** A computer-readable storage medium, wherein the computer-readable storage medium is configured to store a computer program, and when the computer program is run on a computer, the computer is enabled to perform the method according to any one of claims 1 to 8, or the computer is enabled to perform the method according to any one of claims 9 to 14.

**31.** A computer program product, wherein when the computer program product runs on a computer, the computer is enabled to perform the method according to any one of claims 1 to 8, or the computer is enabled to perform the method according to any one of claims 9 to 14.

**32.** A chip, comprising a processor and a communication interface, wherein the processor is configured to read instructions or a computer program to perform the method according to any one of claims 1 to 8, or enable the computer to perform the method according to any one of claims 9 to 14.

**33.** A communication system, comprising the first terminal apparatus according to any one of claims 15 to 22, and comprising the second terminal apparatus according to any one of claims 23 to 28.

FIG. 1

FIG. 2

FIG. 3

FIG. 4

FIG. 5

Subchannel #1

Subchannel #2

Subchannel #3

Subchannel #4

Subchannel #5

Subchannel #6

Subchannel #7

First slot

FIG. 6

Subchannel #1

Subchannel #2

Subchannel #3

Subchannel #4

Subchannel #5

Subchannel #6

Subchannel #7

First slot

FIG. 7

FIG. 8

Communication apparatus 900

Transceiver unit 910

Processing unit 920

FIG. 9

Communication apparatus 1000

Transceiver unit 1010

Processing unit 1020

FIG. 10

Communication apparatus 1100

Processor 1110

Memory 1120

FIG. 11

Communication system 1200

First terminal apparatus 1210

Second terminal apparatus 1220

FIG. 12

## INTERNATIONAL SEARCH REPORT

| International application No. |
|---|
| **PCT/CN2021/072278** |

**A. CLASSIFICATION OF SUBJECT MATTER**

H04W 72/04(2009.01)i; H04W 72/08(2009.01)i; H04W 72/12(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 侧行, 侧边, 侦听, 检测, 时隙, 子信道, 资源, 预约, 预占, 预留, 占用, 空闲, 可用, 半双工, 辅助, 帮助, 替代, 指示, 选择, 排除, sidelink, sensing, slot, sub channel, SCI, reserv+, half duplex, coordination, assistance, help, share, indicate, select, exclude

**C. DOCUMENTS CONSIDERED TO BE RELEVANT**

| Category* | Citation of document, with indication, where appropriate, of the relevant passages | Relevant to claim No. |
|---|---|---|
| X | LG ELECTRONICS. "Discussion on Feasibility and Benefits for Mode 2 Enhancement" *3GPP TSG RAN WG1 Meeting #103-e R1-2007896*, 01 November 2020 (2020-11-01), full text, sections 1-3 | 1-33 |
| X | OPPO. "Inter-UE Coordination in Mode 2 of NR Sidelink" *3GPP TSG RAN WG1 #102-e R1-2006011*, 07 August 2020 (2020-08-07), full text, sections 1-3 | 1-33 |
| A | CN 111263442 A (CHINA ACADEMY OF INFORMATION AND COMMUNICATIONS TECHNOLOGY) 09 June 2020 (2020-06-09) entire document | 1-33 |
| A | CN 108024264 A (ZTE CORPORATION) 11 May 2018 (2018-05-11) entire document | 1-33 |
| A | CN 111836371 A (GOHIGH DATA NETWORKS TECHNOLOGY CO., LTD.) 27 October 2020 (2020-10-27) entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 September 2021** | **28 September 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/072278**

| Patent document cited in search report | | | Publication date (day/month/year) | Patent family member(s) | | | Publication date (day/month/year) |
|---|---|---|---|---|---|---|---|
| CN | 111263442 | A | 09 June 2020 | None | | | |
| CN | 108024264 | A | 11 May 2018 | US | 10959209 | B2 | 23 March 2021 |
| | | | | WO | 2018082645 | A1 | 11 May 2018 |
| | | | | US | 2020059896 | A1 | 20 February 2020 |
| CN | 111836371 | A | 27 October 2020 | None | | | |

Form PCT/ISA/210 (patent family annex) (January 2015)

34